# EUROPEAN PATENT APPLICATION

(11) **EP 4 717 390 A1**
(43) Date of publication of application: **01.04.2026**
(21) Application number: 23219995.0
(22) Date of filing: 22.12.2023
(51) Int. Cl.: B23K 9/02, B23K 26/20, B23K 37/04, H01M 50/503, H01M 50/516, B23K 101/38

(54) **WELDING PREPARATION DEVICE, BATTERY MODULE, USE OF A WELDING PREPARATION DEVICE FOR CLAMPING BATTERY CELL TABS, AND METHOD OF WELDING BATTERY CELL TABS**

(71) Applicant: Lilium eAircraft GmbH, 82234 Wessling (DE)
(72) Inventor: Srinivasan, Karthick Sudarsan, 82234 Wessling (DE); Kastner, Eugen, 82234 Wessling (DE); Engel, Klaus, 82234 Wessling (DE)
(74) Representative: Ter Meer Steinmeister & Partner

(57) **Abstract**

Welding preparation device (1) for preparing at least two battery cell tabs (P1, P2) for welding comprising: a clamping mechanism (2) comprising: a support part (3); and a clamping part (4) for clamping the at least two battery cell tabs (P1, P2) at a clamping force exertion portion (41) thereof together with the support part (3) therebetween within a clamping region (CR) by a clamping force along a clamping force direction. In order to improve welding quality, the clamping mechanism (2) has an access portion (7) which, in a clamped state, allows access to the clamping region (CR) in order to provide a weld seam to the battery cell tabs (P1, P2).

## Description

The present application relates to a welding preparation device, a battery module, a use of a welding preparation device for clamping battery cell tabs, and a method of welding battery cell tabs.

In the prior art, it is known to connect adjacent battery cells to increase capacity and/or voltage. Thereby, each battery cell has battery cell tabs formed of different metal materials which constitute the respective positive and negative electrodes. One battery cell tab can be connected to the battery cell tab of an adjacent battery cell. As a connection method usually welding is used in order to ensure a stable electrical connection.

However, in the prior art, in the welding, it is hard to perform the welding properly as a welding operator needs to bring the two battery cell tabs into close contact.

It is thus an object of the present invention to facilitate and improve welding of adjacent battery cell tabs.

This object is achieved by a welding preparation device having the features of claim 1.

According to a first aspect, there is provided a welding preparation device for preparing at least two battery cell tabs for welding comprising: a clamping mechanism comprising: a support part; and a clamping part for clamping the at least two battery cell tabs at a clamping force exertion portion thereof together with the support part therebetween within a clamping region by a clamping force along a clamping force direction, wherein the clamping mechanism has an access portion which, in a clamped state, allows access to the clamping region in order to provide a weld seam to the battery cell tabs.

According to this aspect, the battery cell tabs can be reliably contacted to each other in the clamping region. The access portion allows to access the clamping region, such that welding can be performed in the region where the battery cell tabs are in stable contact, in particular, the weld seam can be formed within the clamping region. It is to be noted that in the region of the access portion, the tabs can have a small gap therebetween along the clamping force direction of maximum 10 %, preferably of maximum 5 %, more preferably 0 % (that is, no gap) of the maximum thickness of a tab in the region of the access portion. For example, a welding tool such as an electrode or an electric arc may be brought close to or in contact with at least one of the clamped battery cell tabs via the access portion. Thus, welding can be performed in an improved manner such that the battery cell tabs can be reliably connected in a material fit.

The weld seam can extend along a lengthwise direction of the tabs, and can have a minimum distance on both sides from the boundary of the access portion along a widthwise direction of 0,7 mm, preferably of 1,0 mm. Also, the weld seam may have a widthwise dimension of at least 40 %, preferably of 50%, of a widthwise dimension of the access portion at the clamping region.

It is to be noted that the clamping region is the outer envelope of an overlapping area along the clamping force direction between contact surfaces of the clamping force exertion portion and the support part. The respective contacts surfaces may be completely planar (that is, lie in one plane), respectively, or may have portions which are shifted from each other along the clamping force direction. They preferably are orientated parallel to each other in the clamped state.

In the clamped state, the battery cell tabs can have a maximum overlapping thickness of 90 % of the superimposed thicknesses in the unclamped state, preferably of 80 %.

It is preferable, if a plurality of access portions are formed which are spaced apart from each other, more preferably, along a lengthwise direction of the battery cell tabs perpendicular to the clamping force direction.

Thus, multiple electrodes can be brought into contact with the clamped battery cell tabs.

According to another aspect the clamping part may have at least one initial guiding portion which protrudes beyond the clamping force exertion portion and the support part along a lengthwise direction of the clamping mechanism in order to restrict movement of at least one of the battery cell tabs away from a side of the clamping force exertion portion and the support part.

Hence, the welding preparation device can approach or be inserted between the battery cell tabs along the lengthwise direction. In other words, an approaching direction is the lengthwise direction. Then, the initial guiding portion can contact the at least one battery cell tab such as to guide it along the lengthwise direction of the clamping mechanism (or the battery cell tabs) close to the support part in the widthwise direction. Hence, clamping can be performed more reliable. It is to be noted that the at least one initial guiding portion may be arranged sidewards of the support part and the clamping force exertion portion in a direction perpendicular to the clamping force direction, that is, in the widthwise direction.

Preferably, the at least one initial guiding portion has an initial guiding tapered portion which is formed at a distal end portion of the initial guiding portion and tapered along the lengthwise direction towards the side of the clamping force exertion portion and the support part.

Thereby, the initial guiding portion can more reliable guide the at least one battery cell tab towards the support part along the lengthwise direction.

Preferably, the clamping mechanism may further comprise a securing mechanism configured to secure the clamping force.

The clamping force can hold the battery cell tabs in contact. The securing mechanism in turn can reduce the load on an operator. The securing mechanism closes the force flow with the clamping force. Hence, an operator is not required to clamp the tabs in a manual manner. He can thus pay full attention to the welding process.

Preferably, the securing mechanism is releasable, more preferably comprises a pin-hole connection.

Thus, the clamping mechanism can be opened again, which enables the welding preparation device for reuse. In particular, after welding it may be desired to remove the welding preparation device. The securing mechanism can be formed via force and/or form fit. A pin-hole connection can further increase operability. For example such connection can be formed by a screw and a threaded hole.

According to still another aspect, the clamping part may be relatively pivotable, with respect to the support part.

Therefore, operability can be increased as the support part and the clamping part can be separated prior to clamping and then be moved towards each other to apply the clamping force. This is advantageous over configurations where the support part and the clamping part are arranged only to deform elastically. In addition, it can foster a self-alignment of the clamping mechanism during approach to or insertion between the battery cell tabs. This, is advantageous compared with a configuration where the clamping part is relatively moveable in another manner, for example, translationally, which is however also comprised by the present invention.

According to another aspect, the clamping part may comprise at least one side portion provided adjacent to the clamping force exertion portion in a direction perpendicular to the clamping force direction, wherein the at least one side portion may have a protruding portion protruding beyond the clamping force exertion portion towards a support part side along the clamping force direction.

According thereto, the protruding portion may act as a protection portion which protects the battery cell tabs clamped between the clamping force exertion portion and the support part. Thus, buckling of the battery cell tabs can be prevented. Furthermore, the protruding portion can act as a guiding portion which guides at least one of the battery cell tabs along the clamping force direction and along the lengthwise direction. In this regard, the direction perpendicular to the clamping force direction refers particularly to a direction perpendicular to a moving or deformation plane of the clamping part and the support part, or in other words, to a widthwise direction of the battery cell tabs.

In this regard, the at least one side portion with the protruding portion may form the initial guiding portion.

Hence, the initial guiding portion can be provided continuously to the side portion along the lengthwise direction which makes the configuration simple. In particular, the side portion and the initial guiding portion can be provided in a monolithic way.

Preferably, the protruding portion has a tapered portion being tapered towards the clamping force exertion portion.

Hence, the protruding portion may slide with ease with respect to the at least one battery cell tab. That is, alignment between a portion to be clamped of the at least one battery cell bad and the clamping force exertion portion can be ensured. In other words, the battery cell tab can be reliably clamped by the clamping force exertion portion. Further, the tapered portion can act as a deforming portion, which deforms at least one of the battery cell tabs such that it can be clamped by the clamping force exertion portion. In particular, the tapered portion may extend with a component toward the side of the clamping force exertion portion along the clamping force direction and with a component toward the side of the clamping force exertion direction along a direction perpendicular to the clamping force direction. Thus, at least one battery cell tab coming into contact with the tapered portion along the clamping force direction can be bent toward the clamping force exertion direction.

It is preferable if the tapered portion is arranged at the distal end portion (support part side) of the protruding portion.

Alternatively or additionally, the clamping force exertion portion and the at least one side portion define a recessed escape portion therebetween recessed toward a side away from the support part.

Thus, if a battery cell tab is clamped, it can be prevented from being damaged at the transition between the clamping force exertion portion and the protruding portion of the side portion. This applies particularly if at least one of the battery cell tabs has a bent shape.

Also, the protruding portion may overlap the support part in at least a clamped state in the direction perpendicular to the clamping force direction.

Hence, at least one battery cell tab can be stabilized between the support part and the protruding portion.

Preferably, the access portion is a recess penetrating the clamping force exertion portion and/or the support part, and more preferably, has a tapered shape towards the battery cell tabs.

This allows to provide the access portion in a simple manner. A welding tool can thus easily approach the clamped tabs. It is preferable if the recess exclusively penetrates the clamping force exertion portion and/or the support part, more preferably, with an axis along the clamping force direction.

With the tapered shape, the welding tool can be reliably guided to the battery cell tabs.

Preferably, the clamping part comprises at least one side portion provided adjacent to the clamping force exertion portion in a direction perpendicular to the clamping force direction, and the side portion is preferably formed of a different material from the clamping force exertion portion, and/or the side portion is formed of a material comprising plastic.

Thus, the clamping force exertion portion can be formed of a material suitable to apply the clamping force and to transfer heat, while the side portion can be formed in terms of other requirements, for example, electric insulation. That is, in order to avoid a short circuit between adjacent battery cell tabs of one battery cell, it is beneficial if the side portion is formed of an electrically insulating material which comprises, for example, plastic.

Preferably, the clamping force exertion portion is formed at least partially of a material comprising a metal.

Thus, the clamping force can be reliably provided. Furthermore, heat can be transferred to and/or from the battery cell tabs.

Alternatively or additionally, the support part at least partially, preferably in a support part contact portion, where it contacts with at least one of the battery cell tabs, can be formed of a material comprising a ceramic and/or a plastic.

Thus, the support part can be electrically and thermally insulating. Hence, the battery cell tabs can be spared.

According to still another aspect, the welding preparation device may further comprise a handle portion which is coupled to the support part to extend therefrom, preferably in a direction perpendicular to the clamping force direction.

Thus, an operator can easily grab the welding preparation device at the handle portion. Furthermore, the welding preparation device can be easily approached to or removed from the battery cell tabs. In this regard, the direction perpendicular to the clamping force direction is particularly a direction in the moving plane or the deformation plane, or in other words, a direction parallel to the lengthwise direction of the battery cell tabs.

According to another aspect, there is provided a battery module comprising: at least two adjacent battery cells each having at least one battery cell tab; and the welding preparation device according to any of the aforementioned aspects, wherein adjacent battery cell tabs of adjacent battery cells are clamped by means of the clamping mechanism of the welding preparation device.

Thus, the battery cell tabs can be clamped together, and welding can be performed more reliable such that the electrical connection between adjacent battery cells can be reliably established.

Preferably, during approach of the welding preparation device to or insertion between the battery cell tabs, at least one of the adjacent battery cell tabs is guidable by the initial guiding portion and, then, between the protruding portion and the support part.

Thus, the at least one battery cell tabs can be aligned relative to each other with high accuracy and can be brought into stable contact.

Preferably, the battery cell tabs respectively extend from a respective battery cell body and oppose each other along a direction perpendicular to the clamping force direction, more preferably, the support part is sandwiched between the adjacent battery cell tabs in the direction perpendicular to the clamping force direction.

By means of the welding preparation device, even battery cell tabs which oppose each other along a direction perpendicular to the clamping force direction can be clamped, in particular, if the clamping part has the aforementioned protruding portion with the tapered portion. That is, in this regard, the tapered portion may be the deforming portion. If the support part is sandwiched, it can further stabilize the battery cell tabs.

Another aspect relates to a use of a welding preparation device according to any of the aforementioned aspects for clamping adjacent battery cell tabs of battery cells.

Thereby, the aforementioned aspects can be achieved. In this regard, the battery cell tabs may be arranged as specified in the battery module.

A further aspect relates to a method of welding adjacent battery cell tabs of battery cells, the method comprising: clamping the battery cell tabs by means of the clamping mechanism of the welding preparation device according to any of the aforementioned aspects, welding the clamped battery cell tabs via the access portion, and preferably, removing the welding preparation device after welding.

Hence, the battery cell tabs can be reliably electrically connected to each other, as the welding step can be performed in an enhanced manner. In the welding step, a weld seam can be formed within the clamping region.

Preferably, prior to clamping, the welding preparation device approaches or is inserted between the battery cell tabs such that at least one of the adjacent battery cell tabs is guided by the initial guiding portion and, then, between the protruding portion and the support part.

Hence, the battery cell tabs can be reliably aligned with each other.

The above aspects will now be described in detail by making reference to the accompanying drawings.
Fig. 1 is a schematic view of a battery module.
Fig. 2 is a perspective view of a welding preparation device according to the present invention.
Fig. 3 is a sectional view along the lengthwise direction of the welding preparation device.
Fig. 4 is a sectional view perpendicular to the lengthwise direction along line IV-IV in Fig. 3.

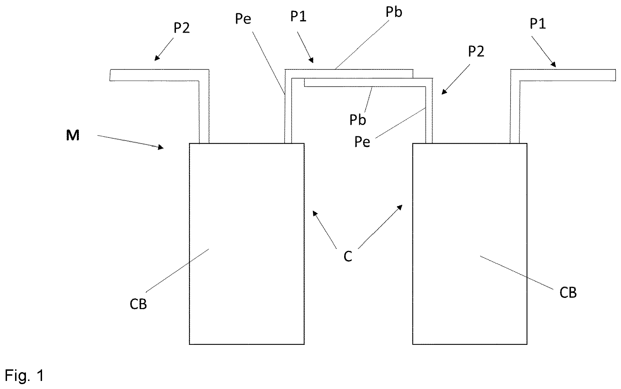

In Fig. 1, a battery module M is shown. The battery module M comprises a plurality of battery cells C. The battery cells C each extend along a cell main direction (up-down-direction) and are arrayed along an array direction which is perpendicular to the cell main direction. The battery cells C each have a cell body CB. The cell body CB may have a cylinder shape or a flat cuboid shape. From one end portion of the cell body CB along the cell main direction, battery cell tabs P1 and P2 extend, that is, protrude along the cell main direction. The battery cell tabs P1 and P2 substantially have a plate shape, respectively, and oppose each other along the array direction. The cell tabs P1 and P2 have a bent shape in cross section and extend along a tab lengthwise direction which is perpendicular to the array direction and the cell main direction (that is, perpendicular to the drawing plane of Fig. 1). They can be formed of a metal material. More specifically, the battery cell tabs P1 and P2 have an extension portion Pe and a bent portion Pb which is bent substantially perpendicular to the extension portion Pe towards the outside, that is, towards an adjacent battery cell.

One battery cell tab P1 may be electrically connected to the negative electrode of the battery cell C and may be formed of aluminium. The other battery cell tab P2 may be electrically connected to the positive electrode and may be formed of copper, for example.

The extension portions Pe of a positive tab P2 and a negative tab P1 of adjacent battery cells C are arranged to oppose each other along the array direction. The bent portion Pb face each other along the cell main direction and are portions to be clamped.

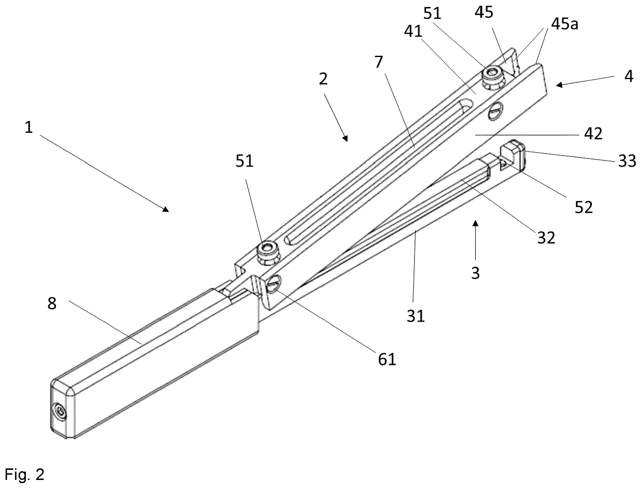

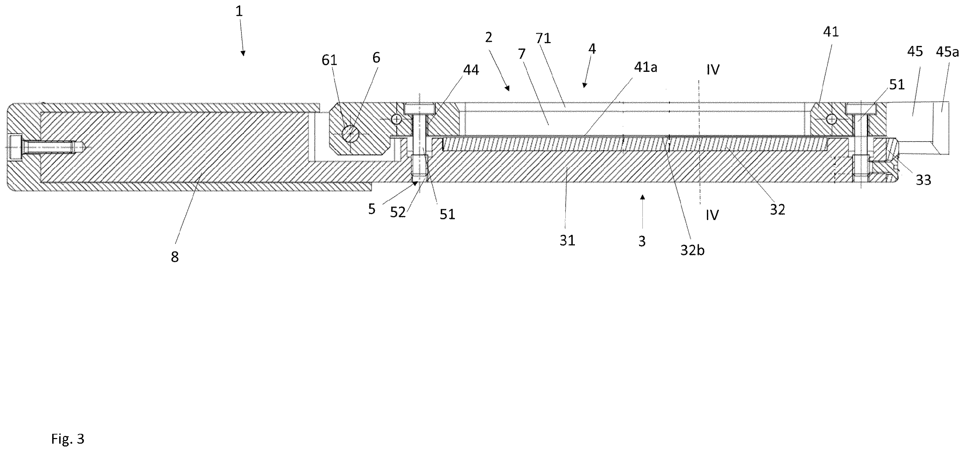

A welding preparation device 1, as shown in Figs. 2 to 4, is provided to clamp the battery cell tabs, in particular, the bent portion Pb.

The welding preparation device 1 has a clamping mechanism 2. The clamping mechanism 2 has a support part 3 and a clamping part 4. Furthermore, the clamping mechanism 2 has a securing mechanism 5.

The clamping part 4 and the support part 3 are connected to be pivotable relatively to each other about a pivot axis 6. The pivot axis 6 is formed by a shaft 61 which couples the support part 3 and the clamping part 4 together. A moving plane (pivoting plane) is a plane perpendicular to the axis 6, and can be defined by the lengthwise direction of the support part (clamping mechanism), which corresponds to a lengthwise direction of the battery cell tabs, and the clamping force direction.

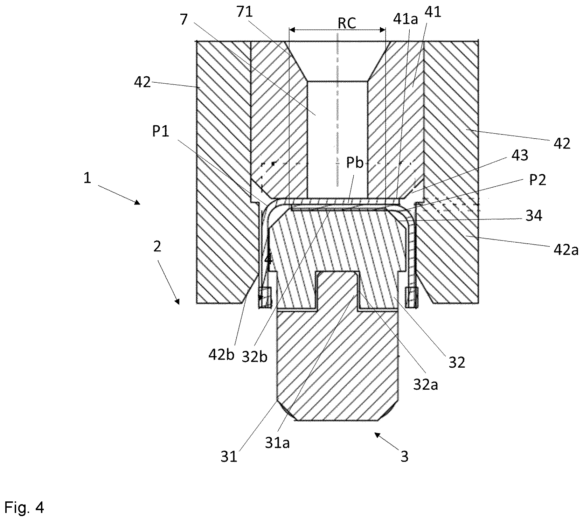

The support part 3 and the clamping part 4 have a substantially symmetrical shape with respect to a moving plane passing through a center in the widthwise direction of the bent portions of the battery cell tabs, as can be seen in Fig. 4. It is to be noted that the cross section is basically constant along a respective lengthwise direction of the support part 3 and the clamping part 4.

In a clamped state shown in Fig. 4, the up-down direction substantially corresponds to a clamping force direction. Spatial relations, in particular of the support part 3 and the clamping part 4, are described with respect to the clamped state
The support part 3 extends along a support part lengthwise direction. That is, it has an extruded shape along the support part lengthwise direction. It can have a support part base 31 and a support part contact portion 32 which is configured to contact one (the lower one) of the battery cell tabs P1 and P2 as shown in Fig. 4. Support part base 31 and support part contact portion 32 are fixed to each other by a spring protrusion and groove connection shown in Fig. 4. That is, the support part contact portion 32 has an elongated groove 32a along the support part lengthwise direction on a lower side (facing away from the clamping part 4). The support part base 31 has a corresponding elongated protrusion 31a fitting into the elongated groove 32a.

On the upper side, opposing the groove 32a, the support part contact portion 32 has a planar contact surface 32b which is configured to contact the tab P2. Furthermore, the support part 3, in particular, the support part contact portion 32 has at the upper side (end portion on the clamping part side) two support part tapered portions 34 at both sides in the widthwise direction, each extending toward the support part side along the clamping force direction and away from the contact surface 32b along the widthwise direction from the contact surface 32b.

From the upper side, that is, opposing the support part contact portion 32 with the tabs P1 and P2 interposed therebetween, the clamping part 4 is configured to approach the support part 3. The clamping part 4 extends along a clamping part lengthwise direction, that is, has an extruded shape. The clamping part 4 has a clamping force exertion portion 41 which is arranged at a center thereof along the array direction which is a widthwise direction (direction perpendicular to the moving plane) and extends along the lengthwise direction. The clamping force exertion portion 41 has a planar contact surface 41a which is configured to contact the other (upper) of the tabs P1 and P2.

At both sides in the widthwise direction of the clamping force exertion portion 41, a respective side portion 42 is provided. In other words, two side portions 42 are provided which sandwich the clamping force exertion portion therebetween in the widthwise direction and extend along the lengthwise direction. It is to be noted that here the two side portions 42 are connected as an integral member. Each side portion 42 has a protruding portion 42a which protrudes from the contact surface 41a toward the lower side (side of the support part) in a clamped state shown in Fig. 4 along the clamping force direction. The protruding portions 42a define an accommodation space therebetween, in which the support part 3 is inserted in the clamped state. The protruding portions 42a overlap the support part 3 in the widthwise direction with a gap therebetween. The tabs are accommodated in said gap. Each protruding portion 42a has a tapered portion 42b which is tapered towards the clamping force exertion portion 41. Here, the tapered portion 42b has a planar surface extending along the clamping force direction and a direction perpendicular thereto towards the clamping force exertion portion 41.

The side portions 42 having the protruding portion 42a and the tapered portion 42b extend along the lengthwise direction, preferably with the same cross sectional shape, beyond the clamping force exertion portion 41 at a distal side from the pivot axis. There, they form an initial guiding portion 45, respectively at both sides in the widthwise direciton. That is, the initial guiding portion is located sidewards of the clamping force exertion portion 41 and the support part contact portion 32 in the widthwise direction, or seen along the clamping force direction.

As seen in Fig. 2, the distal end portion of the initial guiding portion 45 has an initial guiding tapered portion 45a which is tapered along the lengthwise direction and the side of the support part 3 and the clamping force exertion portion 41. The initial guiding tapered portion may be at least partially located further away from the support part 3 in the widthwise direction than the side portion 42, in particular a surface facing the support part of the side portion 42.

The clamping mechanism 2 has an access portion 7 which is provided as a recess exclusively penetrating the clamping force exertion portion 41 from the outside on the clamping part side to the contact surface 41a along the clamping force direction. The access portion has a minimum dimension in the widthwise direction (the direction perpendicular to the clamping force direction and the moving plane) of at least 50 %, preferably 60 %, more preferably 70 %, of the clamping region. The recess (access portion) also extends along the lengthwise direction substantially about the entire length of the clamping force exertion portion 41, that is, at least 60 %, preferably 80 % therefrom. In the clamped state shown in Fig. 4, the access portion 7 (an axis thereof) penetrates along the up-down-direction (the clamping force direction). The access portion 7 further has an access portion tapered portion 71 at an opposite end portion from the contact surface 41a.

As shown in Fig. 4, a clamping region RC is defined by an overlapping area of the contact surfaces 41a and 32b along the clamping force direction. The clamping region RC is a region where the battery cell tabs P1 and P2 can be clamped by the clamping force. Of course, the clamped area of the tabs may be smaller than the clamping region. The clamping region RC also extends along the lengthwise direction as the support part 3 and the clamping force exertion portion extend along the lengthwise direction.

Furthermore, the clamping part 4 has two recessed escape portions 43. Each escape portion 43 is recessed towards the upper side, that is, away from the support part side, or in other words, towards the clamping part side. The escape portion 43 is recessed from a plane of the contact surface 41a, but is preferably provided outside of an overlapping area along the clamping force direction of the contact surface 41a of the clamping part 4 and the contact surface 32b of the support part 3, that is, outside of the clamping region. Here, the escape portion 43 is provided at the corner/transition between the clamping force exertion portion 41 and the protruding portion 42a.

Furthermore, the contact surface 41a encompasses, that is, is larger than, the contact surface 32b, in the widthwise direction.

The securing mechanism 5 comprises a at least one screw 51 (here two) and at least one threaded hole 52 (here two) to which the respective screw 51 is screwed. The securing mechanism 5 is provided at two locations along the respective lengthwise directions of the support part 3 and the clamping part, in particular, at two sides sandwiching a clamping zone where the tabs P1 and P2 are interposed between the clamping part 4 and the support part 3. Hence, the securing mechanism 5 is provided outside of the clamping zone.

Each screw 51 is inserted through through hole 44 of the clamping part 4 which penetrates in the clamping force direction therethrough.

Each threaded hole 52 is provided in a recess of the support part 3 recessed from the clamping part side towards the support part side and has an inner thread matching the outer thread of the screw. The threaded hole 52 has an axis along the clamping force direction.

Furthermore, the welding preparation device 1 has a handle portion 8. The handle portion 8 has a substantially cuboid shape and is connected with the support part 3 to extend therefrom beyond the pivot axis 3 along the support part lengthwise direction, that is, to the opposite side of the clamping zone. Here, the handle portion may be integrally, preferably in a monolithic way, formed with the support part base 31. The handle portion 8 can be formed of a metal material and may have a plastic cover.

In the clamped state, shown particularly in Fig. 4, but also in Fig. 4, the contact surface 41a and 32b are substantially parallel to each other. To this end, the contact surface 41a may pass through the pivot axis 6. Then, the clamping force direction is substantially perpendicular to the contact face 41a. In an unclamped state, contact surface 41a may be inclined toward the support part side along the lengthwise direction away from the pivoting axis.

It is to be noted that in the clamped state, the clamping part 4 and the support part 3 only contact via the tabs P1 and P2, but not at other locations.

At a forward end portion along the support part length direction the support part 3 can preferably comprise a cushion portion 33 connected to the support part base 31, for example, via a screw. The cushion portion 33 can be formed of an elastic material such as a plastic, in particular, an elastomer.

Functions and effects of the present invention will be described in the following.

First, the clamping part 3 is pivoted to an open state, in which it can be supported by the handle portion 8, for example.

Then, the welding preparation device 1 is inserted along the tab lengthwise direction (into the drawing plane of Fig. 1) between the tabs P1 and P2. The extension portions P1 and P2 oppose each other along the array direction (widthwise direction) with the support part 3 interposed therebetween.

Then, an operator can bring the support part 3 in contact with the bent portions Pb along the up-down-direction.

Subsequently, the operator can pivot the clamping part to a closed state in which the clamping force exertion portion 41 contacts the bent portions Pb. In this state, the bent portion Pb are clamped. An operator can insert at least one welding tool in the recess of the access portion 7. Hence, a weld seam can be formed between the bent portions Pb. The weld seam can extend preferably along the entire lengthwise direction of the bent portions Pb, that is, at least 80 % therefrom. The location where the access portion penetrates the contact surface lies within the clamping region CR. Thus, the weld seam can be formed in an improved manner.

However, contrary to the above procedure, the welding preparation device 1 can also approach or be inserted between the tabs along the lengthwise direction in a closed state, where the clamping part and the support part contact each other. Then, the initial guiding portion 45a can come into contact with the extension portion Pe, and during movement along the lengthwise direction, the initial guiding portion 45 can force the extension portion Pe to be close to the support part 3 in the widthwise direction. Subsequently, the extension portion Pe is guided along the lengthwise direction between the support part 3 and the protruding portion 42a.

It is to be noted that the welding preparation device 1 may be inserted between the tabs such that the battery cell tabs P1 and P2 cause the clamping part 4 and the support part 4 to be separated from each other along the clamping force direction. In this case, at least one tab may contact at least the clamping part. That is, there may not be any need for the operator to open the clamping mechanism. The operator only needs to slightly move away the clamping part from the support part for insertion along the lengthwise direction, or the clamping force exertion portion or the support part may have a tapered portion at a distal end thereof which guides the clamping part away from the support part along the clamping force direction upon contact with at least one of the tabs. In other words, clamping mechanism may be configured such that the support part and the clamping part contact each other in a state where the tabs are not interposed therebetween. Then, the clamping force can be exerted without any further operation.

The clamping force may be exerted alone by gravity.

The operator can screw the screws 51 into the through holes 52. Thereby, the clamping force is secured. It is to be noted that the clamping force can be adjusted by the screwing depth.

Hence, the tabs P1 and P2 are clamped and contacting each other without the need for an operator to manually press support part 3 and clamping part 4 together.

The pivoting movement allows easy operation by an operator. Furthermore, the contact area between the clamping force exertion portion 41 and the upper tab P1 can be continuously increased such that operability can be increased.

The protruding portion 32a protruding toward the support part side overlaps with the support part 3 and the tabs P1 and P2 (the extension portion thereof) in the widthwise direction. Thus, the protruding portion 32 can protect the tabs. Further, if the protruding portion is formed of an electrically insulating material, a short circuit can be avoided. Furthermore, the protruding portions 32a can guide a relative movement of the clamping part 3 and the tabs P1 and P2 during the pivoting movement.

By means of the tapered portion 42b, the tab can be reliably brought into contact with the contact surface 41a.

With the contact surface 41a encompassing the contact surface 32b, it is possible to achieve an appropriate face contact state between the tabs P1 and P2.

Furthermore, the at least one support part tapered portion 32 can prevent the tabs P1 and P2 from being damaged.

The protruding portion 42a, preferably, the entire side portion 42 is made of an electrically and/or thermally insulating material such as plastic, in particular, a thermoset.

The clamping force exertion portion 41 is made of an electrically and/or thermally conductive material, in particular, a metal. Thus, the clamping force exertion portion can be used for welding purposes, while the tabs can be protected from the side.

The support part contact portion 32 is formed of a thermally and/or electrically insulating material such as a ceramic. Hence, heat can be maintained within the clamped tabs.

Furthermore, the cushion portion formed of a plastic material can avoid damages at the time of inserting the support part 3 between the tabs.

A method of the present invention comprises the step of, first, clamping the tabs P1 and P2 as described above. Then, a welding electrode can be brought close to the tab P1 and P2 and welding is performed, while the tabs P1 and P2 are clamped.

After welding, the welding preparation device 1 can be removed. It is also possible, prior to welding, to put a protective cover over the access portion 7, but preferably, over the entire clamping mechanism 2.

The battery module M of the present invention has the welding preparation device 1 attached thereto, even though this is not shown in Fig. 1, and can further have the protective cover.

It is to be noted that the welding preparation device can be used in automated processing. That is, the operator may be a robot, for example. Hence, there can be provided an automated device, such as a robot, which has the welding preparation device coupled thereto, for example, to an arm thereof.

In the above, an embodiment has been described where the tabs P1 and P2 are both bent. However, at least one of the tabs may not have the bent portion Pb. For example, the tapered portion 42b can be used to function as a deforming portion initiating a bending deformation of a tab only having the flat extension portion Pe. As a result, still the bending portion Pb may be clamped such that they oppose each other along the clamping force direction.

However, also both extension portions Pe can be clamped. Then, the support part and the clamping part oppose each other along the array direction.

It is also possible to dispense with at least one of the protruding portions. However, they are preferable, in particular, for tabs having the extension portion and the bending portion.

Also, it is possible to clamp a tab having the bent portion Pb and another linearly extending tab which extends parallel to the bent portion.

Finally, the welding preparation device can also be used for other welding targets which are electric or electronic components.

For example, a tab can be connected with a bus bar.

Above, the access portion 7 is the recess penetrating the clamping force exertion portion. Alternatively or additionally, the access portion may be provided to penetrate the support part with an axis along the clamping force direction.

It is also possible that the access portion has another shape as the recess penetrating along the clamping force direction. For example, the access portion may have a groove or recess extending along the direction perpendicular to the moving plane (along the widthwise direction) which connects to a recess being recessed from one of the contact surfaces.

Furthermore, a plurality of access portions can be provided which are spaced apart along the lengthwise direction of the battery cell tabs, that is, along the lengthwise direction of the support part or the clamping part. A plurality of access portions can be provided in one or both of the support part and the clamping part. Furthermore, one access portion may be formed in the clamping part and one access portion may be formed in the support part while they are spaced apart from each other along the lengthwise direction of the clamping mechanism.

The battery module may be a battery module used for providing energy to an electrically driven propulsion unit of an aircraft. Thus, the method of the present invention can be a method for producing a battery module for an electrically driven propulsion unit, wherein the battery module is installed in an aircraft or the propulsion unit.

## Claims

1. Welding preparation device (1) for preparing at least two battery cell tabs (P1, P2) for welding comprising:
a clamping mechanism (2) comprising:
a support part (3); and
a clamping part (4) for clamping the at least two battery cell tabs (P1, P2) at a clamping force exertion portion (41) thereof together with the support part (3) therebetween within a clamping region (CR) by a clamping force along a clamping force direction, wherein
the clamping mechanism (2) has an access portion (7) which, in a clamped state, allows access to the clamping region (CR) in order to provide a weld seam to the battery cell tabs (P1, P2).

2. Welding preparation device (1) according to claim 1, wherein the clamping part (4) has at least one initial guiding portion (45) which protrudes beyond the clamping force exertion portion (41) and the support part (3) along a lengthwise direction of the clamping mechanism (2) in order to restrict movement of at least one of the battery cell tabs (P1, P2) away from a side of the clamping force exertion portion (41) and the support part (3).

3. Welding preparation device (1) according to claim 2, wherein the at least one initial guiding portion (45) has a initial guiding tapered portion (45a) which is formed at a distal end portion of the initial guiding portion (45) and tapered along the lengthwise direction towards the side of the clamping force exertion portion (41) and the support part (3).

4. Welding preparation device (1) according to any of the preceding claims,
wherein the clamping part (4) is pivotable with respect to the support part (3).

5. Welding preparation device (1) according to any of the preceding claims,
wherein the clamping part (4) comprises at least one side portion (42) provided adjacent to the clamping force exertion portion (41) in a direction perpendicular to the clamping force direction,
wherein the at least one side portion (42) has a protruding portion (42a) protruding beyond the clamping force exertion portion (41) towards a support part side along the clamping force direction, and preferably, the at least one side portion (42) with the protruding portion (42a) forms the initial guiding portion (45).

6. Welding preparation device (1) according to claim 5,
wherein the protruding portion (42a) has a tapered portion (42b) being tapered towards the clamping force exertion portion.

7. Welding preparation device (1) according to claim 5 or 6,
wherein the clamping force exertion portion (41) and the at least one side portion (42) define a recessed escape portion (43) therebetween recessed toward a side away from the support part (3).

8. Welding preparation device (1) according to any of claim 5 to 7,
wherein the protruding portion (42a) overlaps the support part (3) in at least a clamped state in the direction perpendicular to the clamping force direction.

9. Welding preparation device (1) according to any of the preceding claims,
wherein the access portion (7) is a recess penetrating the clamping force exertion portion (41) or the support part (3), and, preferably, has a tapered shape towards the battery cell tabs (P1, P2).

10. Welding preparation device (1) according to any of the preceding claims,
wherein the clamping part (4) comprises at least one side portion (42) provided adjacent to the clamping force exertion portion (41) in a direction perpendicular to the clamping force direction, and
wherein the side portion (42) is formed of a different material from the clamping force exertion portion (41), and/or the side portion (42) is formed of a material comprising plastic.

11. Welding preparation device (1) according to any of the preceding claims,
wherein the clamping force exertion portion (41) is formed at least partially of a material comprising a metal, and/or
the support part (3) at least partially, preferably in a support part contact portion (32), where it contacts with at least one of the battery cell tabs (P1, P2), is formed of a material comprising a ceramic and/or a plastic.

12. Welding preparation device (1) according to any of the preceding claims,
further comprising a handle portion (8) which is coupled to the support part (3) to extend therefrom, preferably in a direction perpendicular to the clamping force direction.

13. Battery module (M) comprising:
at least two adjacent battery cells (C) each having at least one battery cell tab (P1, P2); and
the welding preparation device (1) according to any of the preceding claims,
wherein adjacent battery cell tabs (P1, P2) of adjacent battery cells (C) are clamped by means of the clamping mechanism (2) of the welding preparation device (1),
preferably,
during approach of the welding preparation device (1) to the battery cell tabs (P1, P2), at least one of the adjacent battery cell tabs (P1, P2) is guidable by the initial guiding portion (45) and, then, between the protruding portion (42a) and the support part (3), and/or
the battery cell tabs (P1, P2) respectively extend from a respective battery cell body (CB) and oppose each other along a direction perpendicular to the clamping force direction, more preferably, the support part (3) is sandwiched between the adjacent battery cell tabs (P1, P2) in the direction perpendicular to the clamping direction.

14. Use of a welding preparation device (1) according to any of the claims 1 to 12 for clamping adjacent battery cell tabs (P1, P2) of battery cells (C).

15. Method of welding adjacent battery cell tabs (P1, P2) of battery cells (C), the method comprising:
clamping the battery cell tabs (P1, P2) by means of the clamping mechanism (2) of the welding preparation device (1) according to any of claims 1 to 12, wherein, preferably, prior to clamping, the welding preparation device (1) is approached to the battery cell tabs (P1, P2) such that at least one of the adjacent battery cell tabs (P1, P2) is guided by the initial guiding portion (45) and, then, between the protruding portion (42a) and the support part (3),
welding the clamped battery cell tabs (P1, P2) via the access portion (7), and
preferably, removing the welding preparation device (1) after welding.
